# EUROPÄISCHE PATENTANMELDUNG

(11) **EP 4 015 273 A1**
(43) Veröffentlichungstag der Anmeldung: **22.06.2022**
(21) Anmeldenummer: 21211926.7
(22) Anmeldetag: 02.12.2021
(51) Int. Cl.: B60K 11/08

(54) **VERKLEIDUNGSTEIL FÜR EINEN STOSSFÄNGER EINES KRAFTFAHRZEUGS**

(30) Priorität: 18.12.2020 DE 102020134112
(71) Anmelder: REHAU Automotive SE & Co. KG, 95111 Rehau (DE)
(72) Erfinder: Müller, Claus, 95028 Hof (DE)

(57) **Zusammenfassung**

Die Erfindung betrifft eine Stoßfängerverkleidung für ein Kraftfahrzeug (V), umfassend ein Verkleidungselement (1) mit einer Wandstärke (X) und einer im bestimmungsgemäßen Zustand sichtbaren Außenfläche (A), und eine der Außenfläche (A) gegenüberliegende Innenfläche (I), wobei das Verkleidungselement (1) mindestens eine das Verkleidungselement (1) durchsetzende Ausnehmung (2) aufweist, wobei ein Verschlusselement (3) vorgesehen ist zum wahlweisen, zumindest teilweisen, Verschließen und Freilegen der Ausnehmung (2), wobei das Verschlusselement (3) eine flexible Klappe (4) umfasst, die einen relativ zum Verkleidungselement (1) feststehenden und als Drehgelenk wirkenden Abschnitt (5) und einen relativ zum Verkleidungselement (1) beweglichen Abschnitt (6) aufweist, wobei der bewegliche Abschnitt (6) zwischen einer Position des Verschließens der Ausnehmung (2) durch die flexible Klappe (4) und einer Position des Freilegens der Ausnehmung (2) bewegbar ist, wobei in der Position des Verschließens der Ausnehmung (2) der bewegliche Abschnitt (6) mit dem Verkleidungselement (1) abschließt, wobei im Bereich des beweglichen Abschnitts (6) der Randbereich (7) oder zumindest ein Randbereich der Klappe (4) in einem Querschnitt abgeschrägt oder abgestuft ausgebildet ist und der Randbereich (8) oder der zumindest ein Randbereich der Ausnehmung (2) gegengleich hierzu abgeschrägt oder abgestuft ist.

## Beschreibung

Die vorliegende Erfindung betrifft eine Stoßfängerverkleidung für ein Kraftfahrzeug, umfassend ein Verkleidungselement mit einer Wandstärke und einer im bestimmungsgemäßen Zustand sichtbaren Außenfläche, und umfassend eine der Außenfläche gegenüberliegende Innenfläche, wobei das Verkleidungselement mindestens eine das Verkleidungselement durchsetzende Ausnehmung aufweist, wobei ein Verschlusselement vorgesehen ist zum wahlweisen, zumindest teilweisen, Verschließen und Freilegen der Ausnehmung, wobei das Verschlusselement eine flexible Klappe umfasst, die einen relativ zum Verkleidungselement feststehenden und als Drehgelenk wirkenden Abschnitt und einen relativ zum Verkleidungselement beweglichen Abschnitt aufweist, wobei der bewegliche Abschnitt zwischen einer Position des Verschließens der Ausnehmung durch die flexible Klappe und einer Position des Freilegens der Ausnehmung bewegbar ist, wobei in der Position des Verschließens der Ausnehmung der bewegliche Abschnitt mit dem Verkleidungselement abschließt.

Eine derartige Stoßfängerverkleidung ist aus der US10,625,596 B2 vorbekannt. Eine Stoßfängerverkleidung des Standes der Technik ist jedoch dahingehend problematisch, dass die entstehende Fuge zwischen der Klappe und dem angrenzenden Verkleidungselement ästhetisch unbefriedigend ist. Zudem sind in der Verschlussposition hohe Zuhaltekräfte erforderlich, damit es bei großen Geschwindigkeiten nicht zu einem Lufteintritt neben der dann nach innen verdrückten Klappe kommt. Selbst dann besteht durch eine elastische Verformung der Klappe noch die Gefahr eines derartigen Lufteintritts, der zu störend empfundenen Pfeifgeräuschen führt.

Die Erfindung stellt sich daher die Aufgabe eine Stoßfängerverkleidung anzugeben, die gegenüber dem Stand der Technik ein verbessertes Fugenbild und eine zuverlässige Abdichtung in der Verschlussposition gewährleistet.

Erfindungsgemäß wird diese Aufgabe gelöst durch eine Stoßfängerverkleidung für ein Kraftfahrzeug, umfassend
- ein Verkleidungselement mit einer Wandstärke und einer im bestimmungsgemäßen

Zustand sichtbaren Außenfläche, und
- eine der Außenfläche gegenüberliegende Innenfläche,

wobei das Verkleidungselement mindestens eine das Verkleidungselement durchsetzende Ausnehmung aufweist,
wobei ein Verschlusselement vorgesehen ist zum wahlweisen, zumindest teilweisen, Verschließen und Freilegen der Ausnehmung,
wobei das Verschlusselement eine flexible Klappe umfasst, die einen relativ zum Verkleidungselement feststehenden und als Drehgelenk wirkenden Abschnitt und einen relativ zum Verkleidungselement beweglichen Abschnitt aufweist,
wobei der bewegliche Abschnitt zwischen einer Position des Verschließens der Ausnehmung durch die flexible Klappe und einer Position des Freilegens der Ausnehmung bewegbar ist,
wobei in der Position des Verschließens der Ausnehmung der bewegliche Abschnitt mit dem Verkleidungselement abschließt,
wobei erfindungsgemäß im Bereich des beweglichen Abschnitts der Randbereich oder zumindest ein Randbereich der Klappe in einem Querschnitt abgeschrägt oder abgestuft ausgebildet ist und der Randbereich oder der zumindest ein Randbereich der Ausnehmung gegengleich hierzu abgeschrägt oder abgestuft ist. Die erfindungsgemäße Ausbildung des Verkleidungselements der Stoßfängerverkleidung zeigt eine deutliche Reduktion des Spalts zwischen der flexiblen Klappe und dem angrenzenden Verschlusselement und kaschiert diesen deutlich besser als die Lösung des Standes der Technik. Zudem erlaubt die vorliegende Erfindung es eine Stoßfängerverkleidung anzugeben, die durch Fahrtwind auftretende Lasten auf die flexible Klappe deutlich besser aufzunehmen vermag.

In der Position des Freilegens der Ausnehmung kann der bewegliche Abschnitt relativ zu dem Verkleidungselement über die Außenfläche hervorstehen, wobei der abgeschrägte oder abgestufte Randbereich der Ausnehmung, oder der zumindest eine abgeschrägte oder abgestufte Randbereich der Ausnehmung, in Richtung zur Innenfläche trichterförmig enger zulaufend ausgebildet ist. Bei einer Lackierung einer Stoßfängerverkleidung des Standes der Technik kann die Lackschicht oder können die Lackschichten im Bereich des feststehenden Abschnitts zu Rissen neigen, wenn die Klappe mehrfach zwischen ihrer Verschlussposition und ihrer Freilegungsposition nach innen verschwenkt wird. Es wurde erkannt, dass im Gegensatz hierzu ein Verschwenken nach außen, sodass der bewegliche Abschnitt relativ zu dem Verkleidungselement über die Außenfläche hervorsteht, deutlich weniger bis keine Risse der Lackschicht oder Lackschichten im Bereich des feststehenden Abschnitts zeigt.

Die flexible Klappe kann einstückig aus einem Material mit dem Verkleidungselement ausgebildet sein. Dies erlaubt eine besonders kostengünstige Herstellung.

Das Verkleidungselement kann ein Teilsegment der Stoßfängerverkleidung sein und zusammen mit einem Verkleidungsgrundkörper die gesamte Stoßfängerverkleidung bilden. Hierbei können das Verkleidungselement und der Verkleidungsgrundkörper aus unterschiedlichen Kunststoffmaterialien bestehen. Insbesondere kann hierbei das Verkleidungselement aus einem Kunststoffmaterial bestehen, welches eine bessere Zyklusfestigkeit aufweist als das Kunststoffmaterial des Verkleidungsgrundkörpers.

Generell kann das Verkleidungselement aus einem Kunststoffmaterial bestehen, insbesondere kann das Kunststoffmaterial Polyamid oder Polyurethan umfassen.

Im Bereich des festsehenden Abschnitts kann die Innenfläche eine Auskehlung aufweisen, um die Funktion als Drehgelenk zu erleichtern.

Das Verkleidungselement kann auf der Außenfläche mit einer Lackschicht oder mit mehreren Lackschichten versehen sein. Die Lackschicht oder eine der mehreren Lackschichten kann insbesondere Metallpigmente enthalten.

Die Stoßfängerverkleidung kann eine Stellvorrichtung zum Ausführen der Bewegung des beweglichen Abschnitts zwischen seiner Verschlussposition und seiner Freilegungsposition umfassen.

Teil der Erfindung ist ferner ein Verfahren zur Herstellung einer Stoßfängerverkleidung für ein Kraftfahrzeug, wie vorstehend beschrieben oder nach einem der Ansprüche 1 bis 7, wobei die Stoßfängerverkleidung umfasst:
- ein Verkleidungselement mit einer Wandstärke und einer im bestimmungsgemäßen Zustand sichtbaren Außenfläche, und
- eine der Außenfläche gegenüberliegende Innenfläche,

wobei das Verkleidungselement mindestens eine das Verkleidungselement durchsetzende Ausnehmung aufweist,
wobei ein Verschlusselement vorgesehen ist zum wahlweisen, zumindest teilweisen, Verschließen und Freilegen der Ausnehmung,
wobei das Verschlusselement eine flexible Klappe umfasst, die einen relativ zum Verkleidungselement feststehenden Abschnitt und einen relativ zum Verkleidungselement beweglichen Abschnitt aufweist,
wobei der bewegliche Abschnitt zwischen einer Position des Verschließens der Ausnehmung durch die flexible Klappe und einer Position des Freilegens der Ausnehmung bewegbar ist,
wobei in der Position des Verschließens der Ausnehmung der bewegliche Abschnitt mit dem Verkleidungselement abschließt,
wobei das Verfahren folgende Schritte umfasst:
   - Bereitstellen des Verkleidungselements ohne eine Ausnehmung,
   - Herstellen der Ausnehmung indem das Verkleidungselement unter Ausbildung der flexiblen Klappe partiell aufgetrennt wird, wobei
   im Bereich des hierbei entstehenden beweglichen Abschnitts der Klappe der Randbereich oder zumindest ein Randbereich der Klappe in einem Querschnitt abgeschrägt oder abgestuft ausgebildet wird und der Randbereich oder zumindest ein Randbereich der Ausnehmung gegengleich hierzu abgeschrägt oder abgestuft wird.

Das Auftrennen kann hierbei mittels einer Messerschneide oder mittels eines Laserstrahls oder mittels eines Wasserstrahls oder mittels eines Plasmastrahls erfolgen.

In einem weiteren Schritt kann das Verkleidungselement mit einer Lackschicht oder mit mehreren Lackschichten versehen werden.

### Ausführungsbeispiele

Im Folgenden wird die Erfindung anhand einer lediglich ein Ausführungsbeispiel darstellenden Zeichnung erläutert. Es zeigen schematisch:
- Fig. 1: eine perspektivische Darstellung eines Kraftfahrzeugs mit einer erfindungsgemäßen Stoßfängerverkleidung;

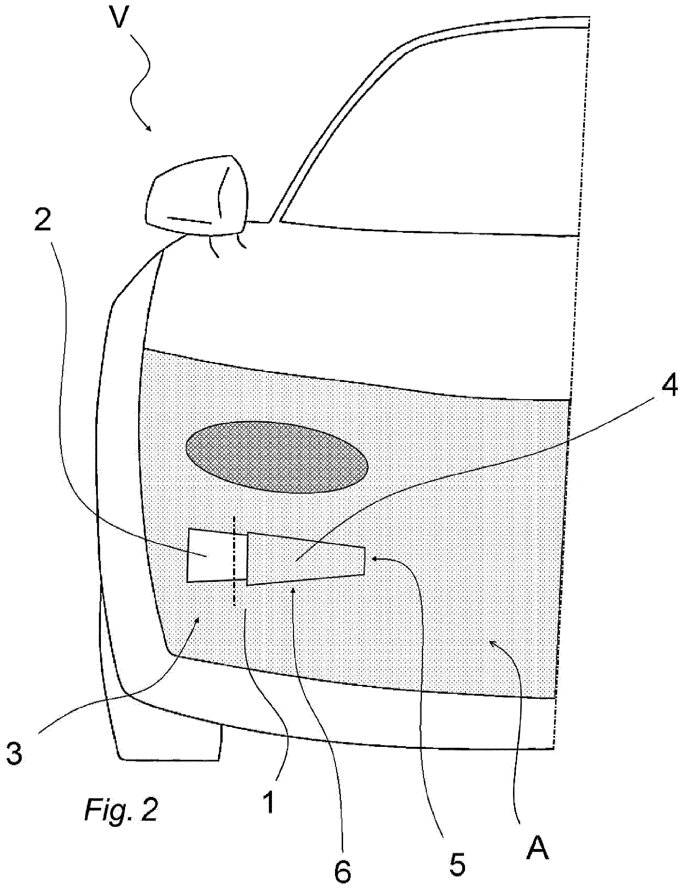

- Fig. 2: eine weitere perspektivische Darstellung des Kraftfahrzeugs mit der erfindungsgemäßen Stoßfängerverkleidung;
- Fig. 3: eine Querschnittsdarstellung gemäß der Schnittlinie aus Fig. 1;
- Fig. 4: eine Querschnittsdarstellung gemäß der Schnittlinie aus Fig. 2;
- Fig. 5 + 6: Varianten des Verkleidungselements in Querschnittsdarstellungen;
- Fig. 7: eine perspektivische Darstellung eines Kraftfahrzeugs mit einer Variante einer erfindungsgemäßen Stoßfängerverkleidung.

In den Figuren werden gleiche oder funktionsgleiche Elemente mit den gleichen Bezugszeichen versehen.

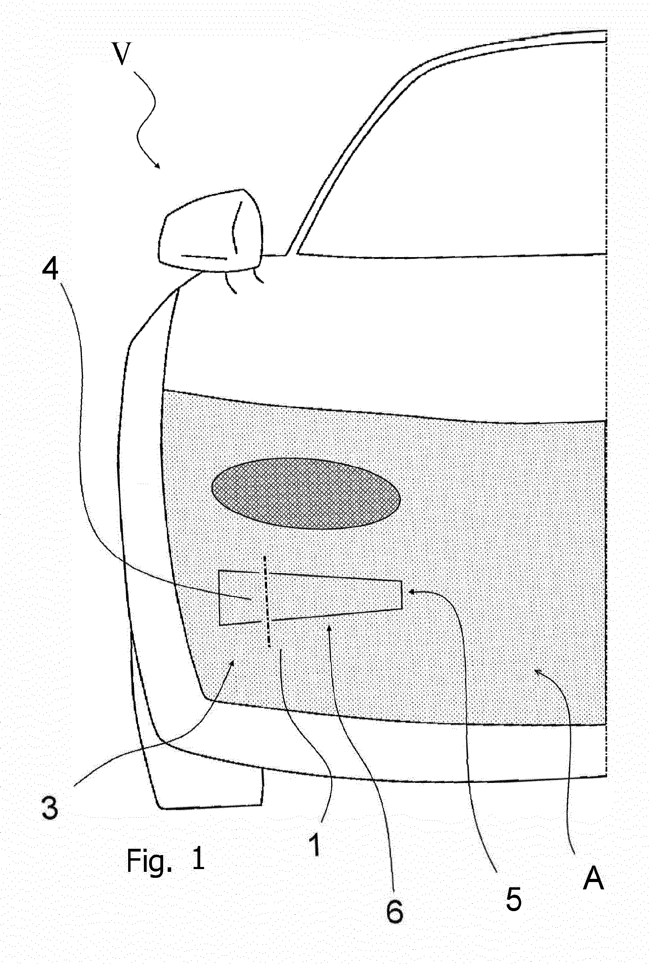

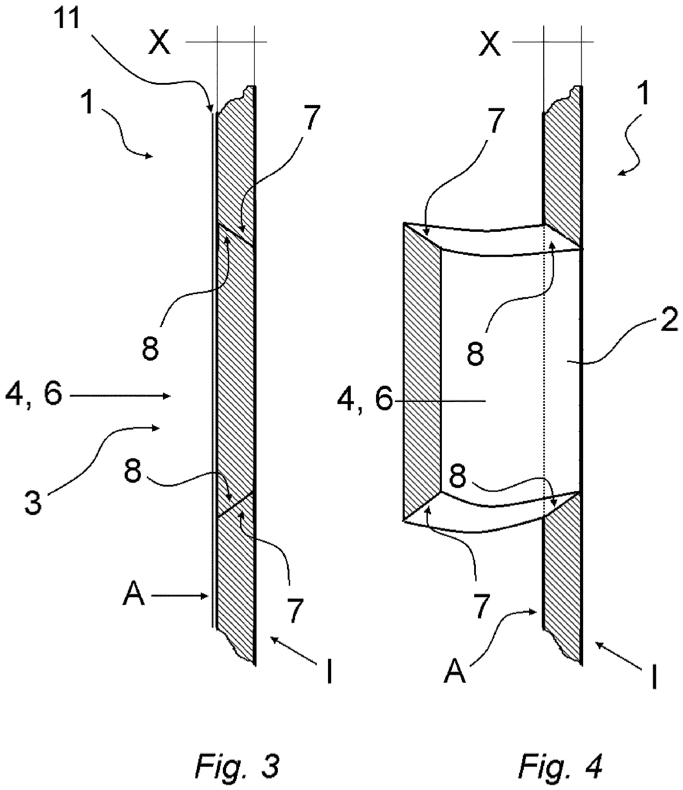

Die Fig. 1 zeigt ein Kraftfahrzeug V mit einer erfindungsgemäßen Stoßfängerverkleidung, umfassend
- ein Verkleidungselement 1 mit einer Wandstärke X und einer im bestimmungsgemäßen Zustand sichtbaren Außenfläche A, und
- eine der Außenfläche A gegenüberliegende Innenfläche I,
wobei das Verkleidungselement 1 mindestens eine das Verkleidungselement 1 durchsetzende Ausnehmung 2 aufweist (vgl. insb. Fig. 4). Es ist ein Verschlusselement 3 vorgesehen zum wahlweisen, zumindest teilweisen, Verschließen und Freilegen der Ausnehmung 2, wobei das Verschlusselement 3 eine flexible Klappe 4 umfasst, die einen relativ zum Verkleidungselement 1 feststehenden und als Drehgelenk wirkenden Abschnitt 5 und einen relativ zum Verkleidungselement 1 beweglichen Abschnitt 6 aufweist.

Der bewegliche Abschnitt 6 ist zwischen einer Position des Verschließens der Ausnehmung 2 durch die flexible Klappe 4 und einer Position des Freilegens der Ausnehmung 2 bewegbar, wobei in der Position des Verschließens der Ausnehmung 2 der bewegliche Abschnitt 6 mit dem Verkleidungselement 1 abschließt.

Im Bereich des beweglichen Abschnitts 6 ist der Randbereich 7 oder zumindest ein Randbereich der Klappe 4 in einem Querschnitt abgeschrägt (vgl. Fig. 3, 4 und 6) oder abgestuft (vgl.

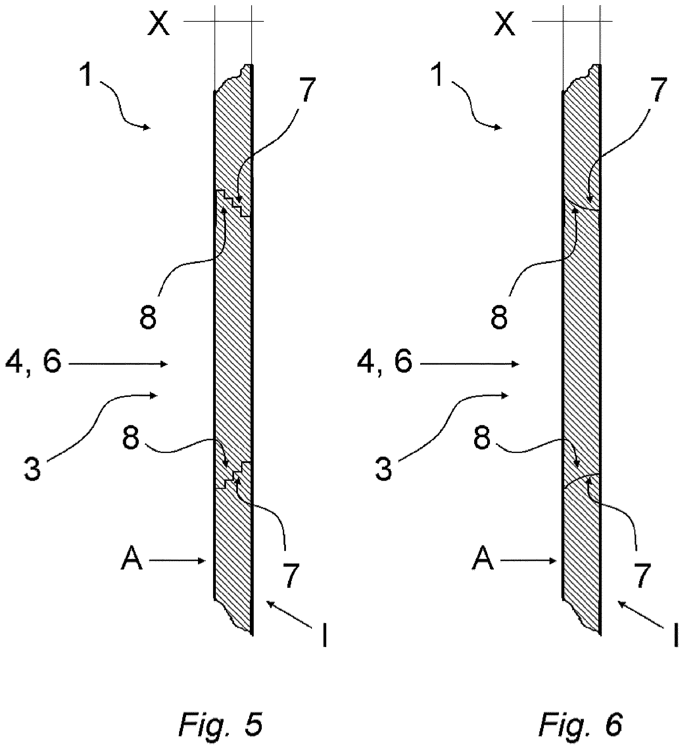

Fig. 5) ausgebildet und der Randbereich 8 oder der zumindest ein Randbereich der Ausnehmung 2 ist gegengleich hierzu abgeschrägt oder abgestuft (vgl. Fig. 3 bis 6). In Fig. 6 ist dargestellt, dass der Begriff "abgeschrägt" vorliegend auch abgerundete Schrägen umfasst. In der Position des Freilegens der Ausnehmung 2 steht der bewegliche Abschnitt 6 relativ zu dem Verkleidungselement 1 über die Außenfläche (A) hervor (vgl. Fig. 4), wobei der abgeschrägte oder abgestufte Randbereich 8 der Ausnehmung 2, oder der zumindest eine abgeschrägte oder abgestufte Randbereich der Ausnehmung 2, in Richtung zur Innenfläche I trichterförmig enger zulaufend ausgebildet ist.

Die flexible Klappe (4) ist einstückig aus einem Material mit dem Verkleidungselement 1 ausgebildet (vgl. Fig. 3 bis 6).

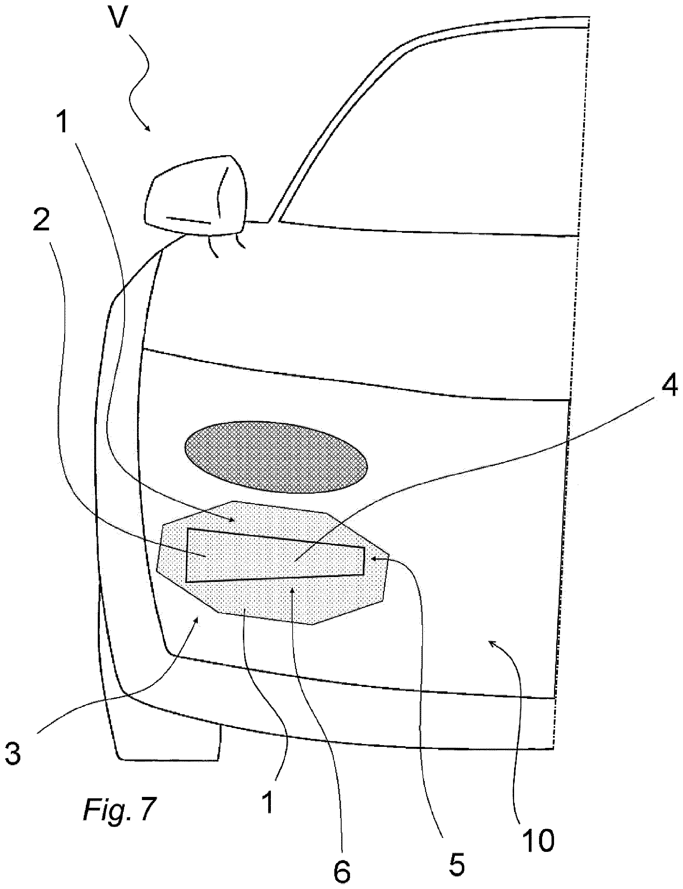

In Fig. 7 ist als Variante dargestellt, dass das Verkleidungselement 1 ein Teilsegment der Stoßfängerverkleidung ist und zusammen mit einem Verkleidungsgrundkörper 10 die gesamte Stoßfängerverkleidung bildet. Der Verkleidungsgrundkörper 10 und das Verkleidungselement 1 sind hierbei im Mehrkomponentenspritzguss hergestellt. Alternativ können Verkleidungsgrundkörper 10 und Verkleidungselement 1 auch form- und/oder kraftschlüssig oder anderweitig stoffschlüssig (beispielsweise geklebt oder geschweißt) verbunden sein. Das Verkleidungselement 1 und der Verkleidungsgrundkörper 10 bestehen aus unterschiedlichen Kunststoffmaterialien.

In Fig. 3 ist erkennbar, dass das Verkleidungselement 1 auf der Außenfläche A mit einer Lackschicht 11 oder mit mehreren Lackschichten versehen ist.

Für alle Ausführungsbeispiele gilt, dass die Stoßfängerverkleidung eine Stellvorrichtung zum Ausführen der Bewegung des beweglichen Abschnitts 6 zwischen seiner Verschlussposition und seiner Freilegungsposition umfassen kann.

Ein Verfahren zur Herstellung einer vorstehend in den Ausführungsbeispielen beschriebenen Stoßfängerverkleidung für ein Kraftfahrzeug, wobei die Stoßfängerverkleidung umfasst:
- ein Verkleidungselement 1 mit einer Wandstärke X und einer im bestimmungsgemäßen Zustand sichtbaren Außenfläche A, und
- eine der Außenfläche A gegenüberliegende Innenfläche I,

wobei das Verkleidungselement 1 mindestens eine das Verkleidungselement 1 durchsetzende Ausnehmung 2 aufweist,
wobei ein Verschlusselement 3 vorgesehen ist zum wahlweisen, zumindest teilweisen, Verschließen und Freilegen der Ausnehmung 2,
wobei das Verschlusselement 3 eine flexible Klappe 4 umfasst, die einen relativ zum Verkleidungselement 1 feststehenden Abschnitt 5 und einen relativ zum Verkleidungselement 1 beweglichen Abschnitt 6 aufweist,
wobei der bewegliche Abschnitt 6 zwischen einer Position des Verschließens der Ausnehmung 2 durch die flexible Klappe 4 und einer Position des Freilegens der Ausnehmung 2 bewegbar ist,
wobei in der Position des Verschließens der Ausnehmung 2 der bewegliche Abschnitt 6 mit dem Verkleidungselement 1 abschließt,
umfasst folgende Schritte:
   - Bereitstellen des Verkleidungselements 1 ohne eine Ausnehmung 2,
   - Herstellen der Ausnehmung 2 indem das Verkleidungselement 1 unter Ausbildung der flexiblen Klappe 4 partiell aufgetrennt wird, wobei
im Bereich des hierbei entstehenden beweglichen Abschnitts 6 der Klappe 4 der Randbereich 7 oder zumindest ein Randbereich der Klappe 4 in einem Querschnitt abgeschrägt oder abgestuft ausgebildet wird und der Randbereich 8 oder zumindest ein Randbereich der Ausnehmung 2 gegengleich hierzu abgeschrägt oder abgestuft wird.

Das Auftrennen erfolgt mittels einer Messerschneide oder mittels eines Laserstrahls oder mittels eines Wasserstrahls oder mittels eines Plasmastrahls erfolgt.

In einem weiteren Schritt kann das Verkleidungselement 1 mit einer Lackschicht 11 (vgl. Fig. 3) oder mit mehreren Lackschichten versehen werden.

## Patentansprüche

1. Stoßfängerverkleidung für ein Kraftfahrzeug (V), umfassend
- ein Verkleidungselement (1) mit einer Wandstärke (X) und einer im bestimmungsgemäßen Zustand sichtbaren Außenfläche (A), und
- eine der Außenfläche (A) gegenüberliegende Innenfläche (I),
wobei das Verkleidungselement (1) mindestens eine das Verkleidungselement (1) durchsetzende Ausnehmung (2) aufweist,
wobei ein Verschlusselement (3) vorgesehen ist zum wahlweisen, zumindest teilweisen, Verschließen und Freilegen der Ausnehmung (2),
wobei das Verschlusselement (3) eine flexible Klappe (4) umfasst, die einen relativ zum Verkleidungselement (1) feststehenden und als Drehgelenk wirkenden Abschnitt (5) und einen relativ zum Verkleidungselement (1) beweglichen Abschnitt (6) aufweist,
wobei der bewegliche Abschnitt (6) zwischen einer Position des Verschließens der Ausnehmung (2) durch die flexible Klappe (4) und einer Position des Freilegens der Ausnehmung (2) bewegbar ist,
wobei in der Position des Verschließens der Ausnehmung (2) der bewegliche Abschnitt (6) mit dem Verkleidungselement (1) abschließt,
**dadurch gekennzeichnet, dass**
im Bereich des beweglichen Abschnitts (6) der Randbereich (7) oder zumindest ein Randbereich der Klappe (4) in einem Querschnitt abgeschrägt oder abgestuft ausgebildet ist und der Randbereich (8) oder der zumindest ein Randbereich der Ausnehmung (2) gegengleich hierzu abgeschrägt oder abgestuft ist.

2. Stoßfängerverkleidung nach Anspruch 1, **dadurch gekennzeichnet, dass** in der Position des Freilegens der Ausnehmung (2) der bewegliche Abschnitt (6) relativ zu dem Verkleidungselement (1) über die Außenfläche (A) hervorsteht, wobei der abgeschrägte oder abgestufte Randbereich (8) der Ausnehmung (2), oder der zumindest eine abgeschrägte oder abgestufte Randbereich der Ausnehmung (2), in Richtung zur Innenfläche (I) trichterförmig enger zulaufend ausgebildet ist.

3. Stoßfängerverkleidung nach einem der vorstehenden Ansprüche, **dadurch gekennzeichnet, dass** die flexible Klappe (4) einstückig aus einem Material mit dem Verkleidungselement (1) ausgebildet ist.

4. Stoßfängerverkleidung nach einem der vorstehenden Ansprüche, **dadurch gekennzeichnet, dass** das Verkleidungselement (1) ein Teilsegment der Stoßfängerverkleidung ist und zusammen mit einem Verkleidungsgrundkörper (10) die gesamte Stoßfängerverkleidung bildet.

5. Stoßfängerverkleidung nach Anspruch 4, **dadurch gekennzeichnet, dass** das Verkleidungselement (1) und der Verkleidungsgrundkörper (10) aus unterschiedlichen Kunststoffmaterialien bestehen.

6. Stoßfängerverkleidung nach einem der vorstehenden Ansprüche, **dadurch gekennzeichnet, dass** das Verkleidungselement (1) auf der Außenfläche (A) mit einer Lackschicht (11) oder mit mehreren Lackschichten versehen ist.

7. Stoßfängerverkleidung nach einem der vorstehenden Ansprüche, **dadurch gekennzeichnet, dass** die Stoßfängerverkleidung eine Stellvorrichtung zum Ausführen der Bewegung des beweglichen Abschnitts (6) zwischen seiner Verschlussposition und seiner Freilegungsposition umfasst.

8. Verfahren zur Herstellung einer Stoßfängerverkleidung für ein Kraftfahrzeug, insbesondere nach einem der Ansprüche 1 bis 7, wobei die Stoßfängerverkleidung umfasst:
- ein Verkleidungselement (1) mit einer Wandstärke (X) und einer im bestimmungsgemäßen Zustand sichtbaren Außenfläche (A), und
- eine der Außenfläche (A) gegenüberliegende Innenfläche (I),
wobei das Verkleidungselement (1) mindestens eine das Verkleidungselement (1) durchsetzende Ausnehmung (2) aufweist,
wobei ein Verschlusselement (3) vorgesehen ist zum wahlweisen, zumindest teilweisen, Verschließen und Freilegen der Ausnehmung (2),
wobei das Verschlusselement (3) eine flexible Klappe (4) umfasst, die einen relativ zum Verkleidungselement (1) feststehenden Abschnitt (5) und einen relativ zum Verkleidungselement (1) beweglichen Abschnitt (6) aufweist,
wobei der bewegliche Abschnitt (6) zwischen einer Position des Verschließens der Ausnehmung (2) durch die flexible Klappe (4) und einer Position des Freilegens der Ausnehmung (2) bewegbar ist,
wobei in der Position des Verschließens der Ausnehmung (2) der bewegliche Abschnitt (6) mit dem Verkleidungselement (1) abschließt,
wobei das Verfahren folgende Schritte umfasst:
- Bereitstellen des Verkleidungselements (1) ohne eine Ausnehmung (2),
- Herstellen der Ausnehmung (2) indem das Verkleidungselement (1) unter Ausbildung der flexiblen Klappe (4) partiell aufgetrennt wird, wobei
im Bereich des hierbei entstehenden beweglichen Abschnitts (6) der Klappe (4) der Randbereich (7) oder zumindest ein Randbereich der Klappe (4) in einem Querschnitt abgeschrägt oder abgestuft ausgebildet wird und der Randbereich (8) oder zumindest ein Randbereich der Ausnehmung (2) gegengleich hierzu abgeschrägt oder abgestuft wird.

9. Verfahren zur Herstellung einer Stoßfängerverkleidung nach Anspruch 8, **dadurch gekennzeichnet, dass** das Auftrennen mittels einer Messerschneide oder mittels eines Laserstrahls oder mittels eines Wasserstrahls oder mittels eines Plasmastrahls erfolgt.

10. Verfahren zur Herstellung einer Stoßfängerverkleidung nach Anspruch 8 oder 9, **dadurch gekennzeichnet, dass** in einem weiteren Schritt das Verkleidungselement (1) mit einer Lackschicht (11) oder mit mehreren Lackschichten versehen wird.
